# EUROPEAN PATENT SPECIFICATION

(11) **EP 4 105 131 B1**
(45) Date of publication and mention of the grant of the patent: **21.08.2024**
(21) Application number: 21779852.9
(22) Date of filing: 12.03.2021
(51) Int. Cl.: B64G 1/10, B64G 1/68, B64G 1/64, G06T 7/246

(54) **CONTROL DEVICE AND COMPUTER PROGRAM**
STEUERUNGSVORRICHTUNG UND COMPUTERPROGRAMM
DISPOSITIF DE COMMANDE ET PROGRAMME D'ORDINATEUR

(30) Priority: 31.03.2020 JP 2020062397
(43) Date of publication of application: 21.12.2022
(73) Proprietor: KAWASAKI JUKOGYO KABUSHIKI KAISHA, Kobe-shi, Hyogo 650-8670 (JP)
(72) Inventor: WATASE, Hirotaka, Chuo-ku, Kobe-shi Hyogo 650-8670 (JP); MORITA, Daichi, Chuo-ku, Kobe-shi Hyogo 650-8670 (JP)
(74) Representative: Leinweber & Zimmermann
(86) International application number: PCT/JP2021/010236
(87) International publication number: WO 2021/200055

(56) References cited:
- EP-A1- 3 156 335
- CN-A- 110 412 868
- JP-A- 2004 330 943
- JP-A- 2014 226 974
- US-A1- 2012 286 098
- US-A1- 2015 097 084
- US-A1- 2015 115 107
- US-A1- 2015 242 700
- US-A1- 2016 363 451

## Description

### Technical Field

The present disclosure relates to navigation for bringing an aerospace vehicle into proximity to a non-cooperative object.

### Background Art

The amount of space debris has been increasing every year, which is starting to have significant negative impacts on space utilization or space development. Various techniques for proactively removing the existing space debris have been proposed. As one representative example, there is a known technique of using a satellite to fix space debris, i.e., a non-cooperative object, to a space debris remover (hereinafter, simply referred to as a "remover"), thereby capturing the space debris.

Examples of the space debris that is targeted for removal include artificial satellites, rockets, etc., whose roles have ended. Since the space debris does not have a reflector or communication equipment, in order to remove the space debris, it is necessary to assuredly bring a removing satellite including a remover into proximity to the space debris. Generally speaking, the removing satellite is brought into proximity to the space debris with the following phases.

First, in a long-distance range, for example, GPS navigation or the like is used to bring the removing satellite closer to the space debris, specifically to a position that is about several kilometers away from the space debris. Next, in an intermediate-distance range, for example, by relative navigation using only angle information about the space debris (i.e., Angles-Only Navigation: AON) with use of an imager such an optical camera, the removing satellite is brought closer to the space debris, specifically to a position that is about several hundred meters away from the space debris. Then, in a short-distance range, the relative position or the attitude of the space debris is measured, and the removing satellite is brought closer to the space debris, specifically to a position that is about several tens of meters away from the space debris, by fly-around (i.e., fly-around phase). Thereafter, in a fixing range, the removing satellite is brought closer to the space debris, specifically to a position that is about several centimeters away from the space debris (i.e., pre-docking phase).

As one example of such a technique of bringing the removing satellite into proximity to the space debris, Patent Literature 1 proposes a method of guiding a spacecraft in the intermediate-distance range.

### Citation List

### Patent Literature

PTL 1: WO 2016/063923
US 2015/115107 A1 discloses a space debris remover aiming to remove space debris object in earth orbits. Angular thrust calculation unit calculates angular thrust. Radial thrust calculation unit calculates radial thrust based on the angular thrust, estimated angular momentum and estimated space debris mass.
US 2015/097084 A1 discloses a spacecraft system including a platform with a dock and an umbilical payout device. A robot is connected to an umbilical paid out by the umbilical payout device and is repeatedly deployable from the dock. The robot includes one or more images, an inertial measurement unit, and a plurality of thrusters. A command module receives image data from the one or more robot images and orientation data from the inertial measurement unit. The command module determines the robot's orientation with respect to an object and issues thruster control commands to control movement of the robot based on the robot's orientation.

### Summary of Invention

### Technical Problem

In the guiding method of Patent Literature 1, the spacecraft transmits information about an estimated orbit of a target non-cooperative object to a ground station, and the ground station performs processing to change the trajectory of the spacecraft or to guide the spacecraft. However, in the guiding method of Patent Literature 1, particularly in a case where the attitude of the target non-cooperative object changes during the fly-around in the short-distance range, it is possible that the spacecraft is not guided to a desirable position relative to the target non-cooperative object.

In view of the above, an objective of the present disclosure is to cause, with a simple configuration, an aerospace vehicle to navigate to a more desirable position relative to a non-cooperative object.

### Solution to Problem

One aspect of the present disclosure provides a control device according to claim 1.

According to the control device of the above aspect, the target trajectory is generated in the plane that is defined by the first vector and the second vector, the first vector being a vector that passes through the center-of-mass position of the non-cooperative object, is parallel to the longitudinal direction of the non-cooperative object, and includes a vector component in a direction in which the aerospace vehicle is to be brought into proximity to the non-cooperative object, the second vector being a vector in an image-taking direction in which the taken image is taken. Therefore, the target trajectory can be generated without a ground station. This makes it possible to suppress increase in the amount of information processing compared to a configuration in which the target trajectory is generated via a ground station.

The present disclosure can be realized not only as a control device, but in various ways. The present disclosure can be realized in the form of, for example, an aerospace vehicle including a control device, a method of controlling an aerospace vehicle, a computer program for realizing the method, or a storage medium storing a computer program therein.

### Brief Description of Drawings

FIG. 1 is a block diagram showing a schematic configuration of a control device as one embodiment of the present disclosure.
FIG. 2A schematically illustrates an aerospace vehicle coming into proximity to space debris, and FIG. 2B schematically illustrates a state where a fixer of the aerospace vehicle is fixed to the space debris.
FIG. 3 is a flowchart showing processing steps in an image-based navigation process.
FIG. 4A, FIG. 4B, and FIG. 4C each schematically illustrate one example of a taken image of the space debris.
FIG. 5A and FIG. 5B each schematically illustrate one example of attitude control of the aerospace vehicle.
FIG. 6 illustrates the steps of generating a target trajectory.
FIG. 7 schematically illustrates one example of target trajectories.
FIG. 8 schematically illustrates the aerospace vehicle orbiting on a target trajectory.
FIG. 9A, FIG. 9B, and FIG. 9C schematically illustrate the aerospace vehicle capturing and removing the space debris.
FIG. 10 is a block diagram showing a schematic configuration of a space debris removal system.

### Description of Embodiments

### [Device Configuration]

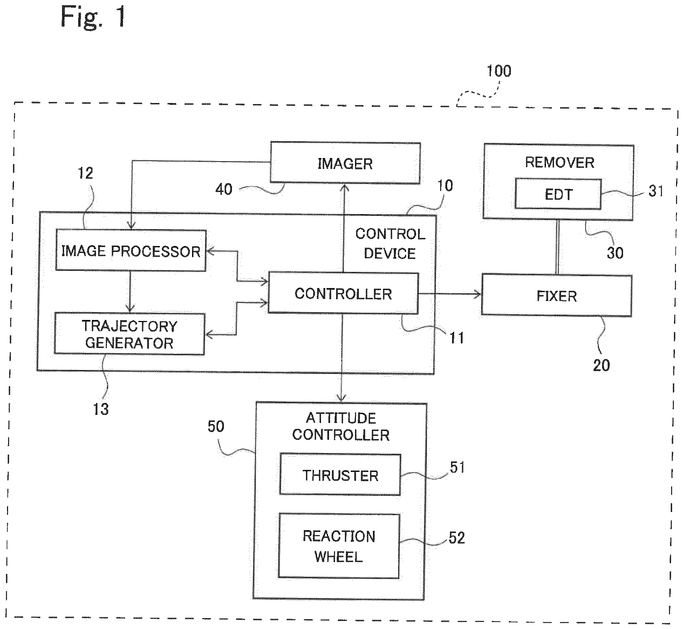

As shown in FIG. 1, a control device 10 is installed in an aerospace vehicle 100, and controls the navigation of the aerospace vehicle 100. In the present embodiment, the aerospace vehicle 100 is an artificial satellite that captures space debris, i.e., a non-cooperative object, in the outer space for removal. Space debris is any unnecessary artificial physical object in orbit. Examples of space debris include used artificial satellites, the upper stages of launched rockets, and fragments generated from explosion or collision.

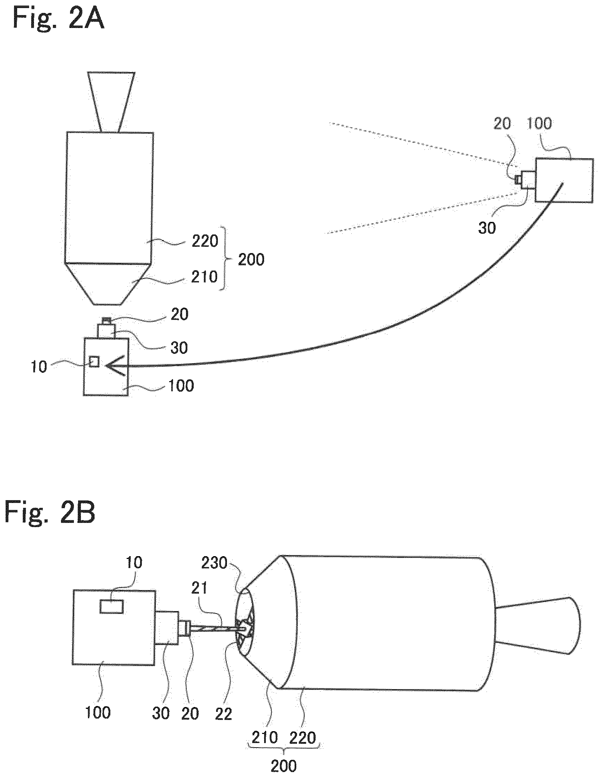

As shown in FIG. 2A and FIG. 2B, space debris 200 has an asymmetrical external shape in the longitudinal direction thereof. The space debris 200 includes a cylindrical body 220 and a circular truncated conical payload attach fitting (PAF) 210, which is continuous with one end of the body 220. The PAF 210 separates an artificial satellite and a rocket from each other. The PAF 210 includes an opening 230.

As shown in FIG. 1, in addition to the control device 10, the following components are installed in the aerospace vehicle 100: an imager 40; an attitude controller 50, which controls the attitude of the aerospace vehicle 100; a fixer 20, which fixes the aerospace vehicle 100 to the space debris 200; and a remover 30, which removes the space debris 200. The imager 40, the fixer 20, and the attitude controller 50 are connected to the control device 10 via control signal lines.

The control device 10 generates a trajectory to bring the aerospace vehicle 100 into proximity to the space debris 200, which is to be removed (hereinafter, this trajectory is referred to also as a "target trajectory"). By controlling the attitude of the aerospace vehicle 100, the control device 10 causes the aerospace vehicle 100 to navigate on the target trajectory, and as indicated by a solid arrow in FIG. 2A, brings the aerospace vehicle 100 into proximity to the space debris 200, and moves the aerospace vehicle 100 to a position at which the space debris 200 is capturable. In the present embodiment, the control device 10 is configured as a microcomputer that includes a CPU and a memory. The CPU of the control device 10 develops and executes a computer program stored in the memory, thereby functioning as a controller 11, an image processor 12, and a trajectory generator 13.

The controller 11 controls the entire operation of the aerospace vehicle 100.

The image processor 12 performs image processing on an image, taken by the imager 40, of the space debris 200 to obtain the center-of-mass position of the space debris 200, a first vector of the space debris 200, and the aspect ratio of the space debris 200 in the taken image. In the present embodiment, the "first vector" is a vector that passes through the center-of-mass position of the space debris 200, is parallel to the longitudinal direction of the space debris 200, and includes a vector component in a direction in which the aerospace vehicle 100 is to be brought into proximity to the space debris 200. In the description herein, the "direction in which the aerospace vehicle 100 is to be brought into proximity to the space debris 200" means, in the longitudinal direction of the space debris 200, a direction toward one side where the PAF 210 is positioned. Steps of obtaining the center-of-mass position, the first vector, and the aspect ratio will be described below.

The trajectory generator 13 generates the target trajectory by utilizing the first vector obtained by the image processor 12.

The imager 40 takes the image of the space debris 200, and outputs the taken image to the image processor 12. The imager 40 is, for example, an optical camera. In the present embodiment, the imager 40 outputs a binarized image that is obtained by binarizing the taken image.

The attitude controller 50 controls the attitude of the aerospace vehicle 100 by driving a thruster 51 and a reaction wheel 52 in accordance with instructions from the controller 11. Either one of the thruster 51 or the reaction wheel 52 may be eliminated from the attitude controller 50. Instead of the thruster 51 and the reaction wheel 52, or in addition to the thruster 51 and the reaction wheel 52, the attitude controller 50 may include other attitude controllers, such as a magnetorquer and a momentum gyro.

The fixer 20 fixes an electrodynamic tether 31 of the remover 30 to the space debris 200. The electrodynamic tether 31 will be described below. As shown in FIG. 2B, the fixer 20 includes an extender 21 and an engager 22. The extender 21 extends in the forward travelling direction of the aerospace vehicle 100, i.e., extends toward the PAF 210. The engager 22 is mounted on an end of the extender 21 in the forward travelling direction of the aerospace vehicle 100. The engager 22 includes protruders and a retainer. The retainer retains a protruding state of the protruders. The protruders can shift its state from a retracted state into the protruding state. When the protruders are in the retracted state, the dimension of the entire engager 22 is less than the dimension of the opening 230. In a case where the extender 21 extends such that the protruders are inserted in the opening 230, the protruders are brought into, and kept in, the shape of rods that are each longer than the radius of the opening 230 (i.e., the protruders are kept in the protruding state). In this state, the dimension of the engager 22 is greater than the dimension of the opening 230 of the PAF 210. Since the internal space of the PAF 210 is wider than the opening 230, the engager 22 will not fall out of the inside of the PAF 210. With this simple configuration, the space debris 200 can be readily and assuredly captured. The number of protruders of the engager 22 is not particularly limited, so long as the number of protruders is plural. Preferably, the number of protruders is three or more. Preferably, when the three or more protruders are in the protruding state, the angles between the protruders are equal to each other. In this case, a polygon that is obtained by connecting the distal ends of the respective protruders in the protruding state is a regular polygon. Accordingly, in the internal space of the PAF 210, the protruders spread in their respective directions at regular intervals, which allows the engager 22 to stably engage with the PAF 210.

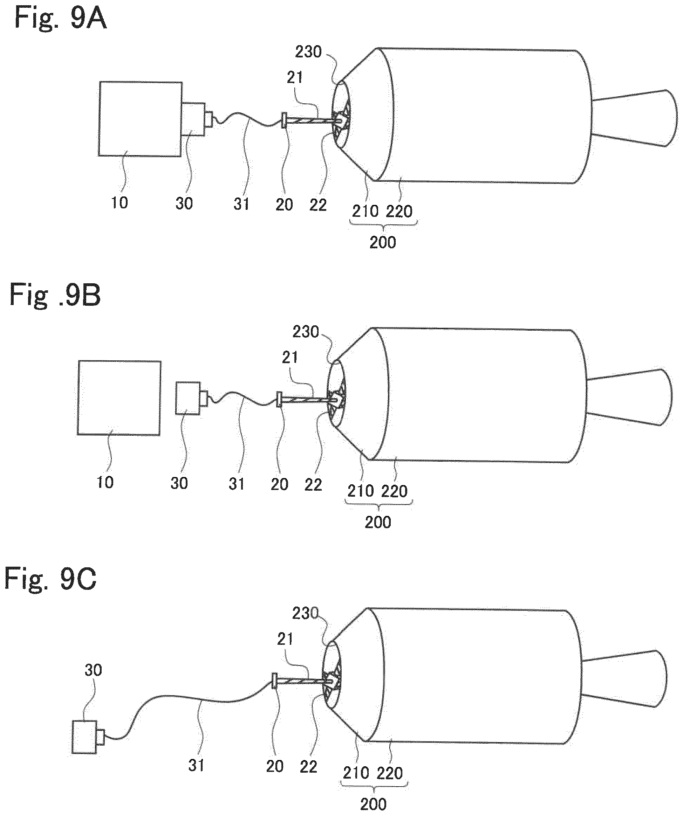

The remover 30 includes the electrodynamic tether (EDT) 31. The EDT 31 is an electrically conductive cable, and is in the state of being wound around a reel in the remover 30. As shown in FIG. 9A, the EDT 31 is fixed to the PAF 210 of the space debris 200 via the fixer 20.

As the space debris 200 orbits around the Earth, the EDT 31 travels within the Earth's magnetic field, and at the time, induced electromotive force and Lorentz force are exerted on the EDT 31. Consequently, thrust in a direction opposite the traveling direction of the space debris 200 is exerted on the space debris 200, and thereby the traveling speed of the space debris 200 can be reduced. In accordance with the reduction in the traveling speed of the space debris 200, the altitude of the space debris 200 decreases gradually. Then, the space debris 200 de-orbits and enters the atmosphere. The remover 30 is not limited to the configuration including the EDT 31. Alternatively, the remover 30 may include a thruster that changes the orbit of the space debris 200. In this case, the remover 30 may be directly coupled to the fixer 20, or may be coupled to the fixer 20 via a tether such as the EDT 31. An operation of the remover 30 (e.g., an operation of unwinding the EDT 31 from the reel) may be controlled by the controller 11.

### [Image-Based Navigation of Aerospace Vehicle 100]

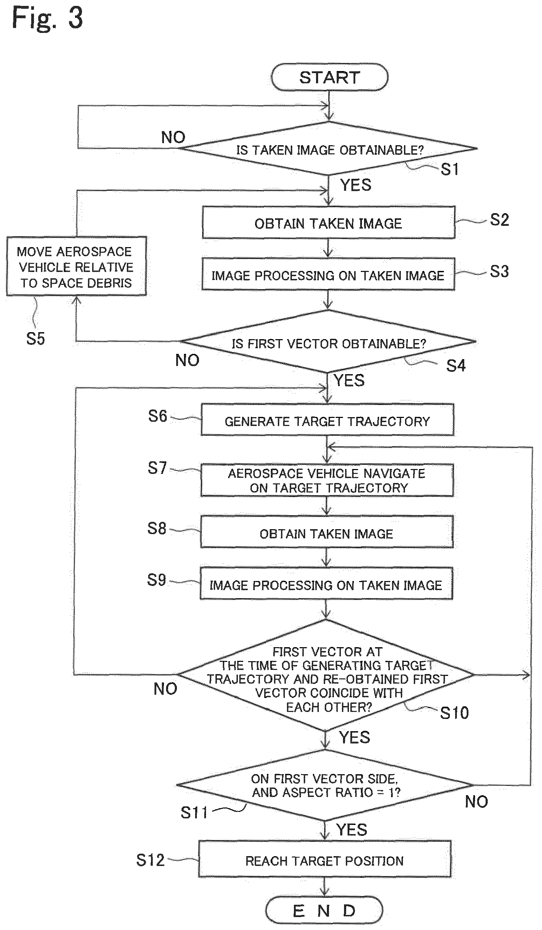

In the present embodiment, the aerospace vehicle 100 comes into proximity to the space debris 200 with four sequential phases corresponding to the following distance ranges to the space debris 200: a long-distance range; an intermediate-distance range; a short-distance range; and a fixing range. In the long-distance range, for example, GPS navigation or the like is used to bring the aerospace vehicle 100 closer to the space debris 200, specifically to a position that is several hundred meters, for example, about 100 meters, away from the space debris 200. In the intermediate-distance range, by angles-only relative navigation with use of the imager 40, the aerospace vehicle 100 is brought closer to the space debris 200, specifically to a position that is several tens of meters, for example, about 30 meters away from the space debris 200. In the short-distance range, an image-based navigation process shown in FIG. 3 is performed to bring the aerospace vehicle 100 closer to the space debris 200, specifically to a position that is about several meters away from the space debris 200, and thereafter, the aerospace vehicle 100 is caused to navigate to its target position relative to the space debris 200. The image-based navigation process is started when the aerospace vehicle 100 reaches the short-distance range.

The controller 11 determines whether or not a taken image of the space debris 200 is obtainable (step S1). In the present embodiment, the controller 11 determines whether or not a taken image of the space debris 200 is obtainable, by determining whether or not the space debris 200 is in the shade. The reason for this is that when the space debris 200 is in the shade, a binarized image of the space debris 200 can be readily obtained by the imager 40. Step S1 is not necessarily performed by the controller 11, but may be performed by the imager 40. As another example, the aerospace vehicle 100 may include an optical sensor, and whether or not the space debris 200 is in the shade may be determined based on a result of detection by the optical sensor. When the space debris 200 is in the shade, a binarized image of the space debris 200 can be readily obtained by emitting light from the aerospace vehicle 100 in the direction of the space debris 200. Whether or not a taken image of the space debris 200 is obtainable is not necessarily determined based on whether or not the space debris 200 is in the shade, but may be determined based on any other determination criterion, so long as it can be determined that a binarized image of the space debris 200 is obtainable.

In a case where it is determined in step S1 that a taken image of the space debris 200 is not obtainable (step S1: NO), the above-described step S1 is repeated until it is determined that a taken image of the space debris 200 is obtainable. On the other hand, in a case where it is determined in step S1 that a taken image of the space debris 200 is obtainable (step S1: YES), the controller 11 obtains a taken image of the space debris 200 from the imager 40 (step S2). As previously mentioned, the taken image of the space debris 200 is a binarized image.

The controller 11 causes the image processor 12 to perform image processing on the taken image (step S3). Specifically, by a known image processing method, the image processor 12 obtains, from the taken image, the center-of-mass position of the space debris 200, the aspect ratio of the space debris 200 in the taken image, and the first vector of the space debris 200. The center-of-mass position of the space debris 200 can be calculated in a manner corresponding to the shape of the space debris 200 in the taken image. For example, in a case where the space debris 200 in the taken image is in the shape of a rectangle, the center-of-mass position of the space debris 200 can be obtained by calculating the point of intersection of the diagonals of the rectangle. The aspect ratio of the space debris 200 in the taken image can be calculated as the ratio between the longer side and the shorter side of the space debris 200 in the taken image. In a case where the aspect ratio is defined as the ratio of the longer side to the shorter side, the calculated aspect ratio is a value greater than or equal to 1, whereas in a case where the aspect ratio is defined as the ratio of the shorter side to the longer side, the calculated aspect ratio is a value less than or equal to 1. The first vector can be calculated based on the fact that the shape of the space debris 200 is asymmetrical in the longitudinal direction thereof.

The controller 11 determines whether or not the first vector is obtainable (step S4).

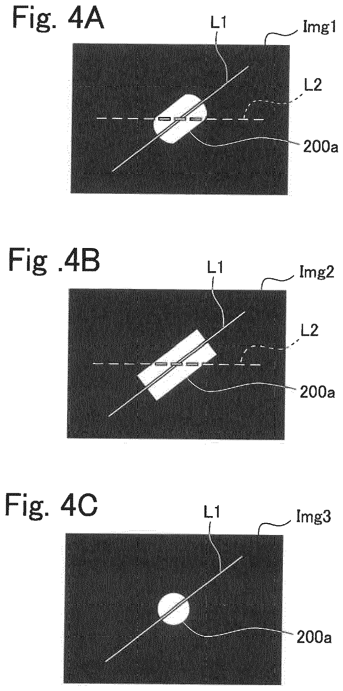

FIG. 4A, FIG. 4B, and FIG. 4C show a taken image Img1, a taken image Img2, and a taken image Img3 of the space debris 200, respectively. In each of the taken images Img1, Img2, and Img3, a white solid line L1 indicates a direction along the first vector, and a white dashed line L2 is a reference line for detecting the attitude of the space debris 200.

As shown in FIG. 4A, in a case where an image of the space debris 200 is taken from a diagonal direction, space debris 200a in the taken image Img1 appears to be shorter than the actual length of the space debris 200 in the longitudinal direction. However, the aspect ratio is not 1. As shown in FIG. 4B, in a case where an image of the space debris 200 is taken from a lateral direction (i.e., from the side), the space debris 200a in the taken image Img2 appears to have a shape corresponding to the actual length of the space debris 200 in the longitudinal direction. Also in the example of FIG. 4B, the aspect ratio is not 1. In a case where the aspect ratio is defined as the ratio of the longer side to the shorter side of the space debris 200a, the aspect ratio in FIG. 4B is the maximum value, whereas in a case where the aspect ratio is defined as the ratio of the shorter side to the longer side of the space debris 200a, the aspect ratio in FIG. 4B is the minimum value.

For the sake of convenience, each of FIG. 4A and FIG. 4B is illustrated in such a manner that the space debris 200 in the taken image has a substantially cylindrical shape. In reality, however, the space debris 200 has an asymmetrical shape in the longitudinal direction. Therefore, in each of the taken images Img1 and Img2, the solid line L1, which indicates the longitudinal direction of the space debris 200a, can be detected, and also, the direction of the first vector can be detected. Accordingly, in a case where the aerospace vehicle 100 is at a position at which the image Img1 illustratively shown in FIG. 4A or the image Img2 illustratively shown in FIG. 4B can be taken, the controller 11 determines that the first vector is obtainable (step S4: YES).

On the other hand, as shown in FIG. 4C, in a case where an image of the space debris 200 is taken from one end side of the space debris 200 in the longitudinal direction, the space debris 200a in the taken image Img3 appears to have a substantially circular shape. Accordingly, the longitudinal direction of the space debris 200a cannot be specified. For this reason, the solid line L1 cannot be detected. In FIG. 4C, for the sake of convenience, the solid line L1 is shown in a manner similar to FIG. 4A and FIG. 4B. However, the actual longitudinal direction is unknown. In this case, in the taken image Img3, the aspect ratio of the space debris 200a is substantially 1. For this reason, the first vector is not obtainable. Accordingly, in a case where the aerospace vehicle 100 is at a position at which only the image Img3 illustratively shown in FIG. 4C can be taken, the controller 11 determines that the first vector is not obtainable (step S4: NO).

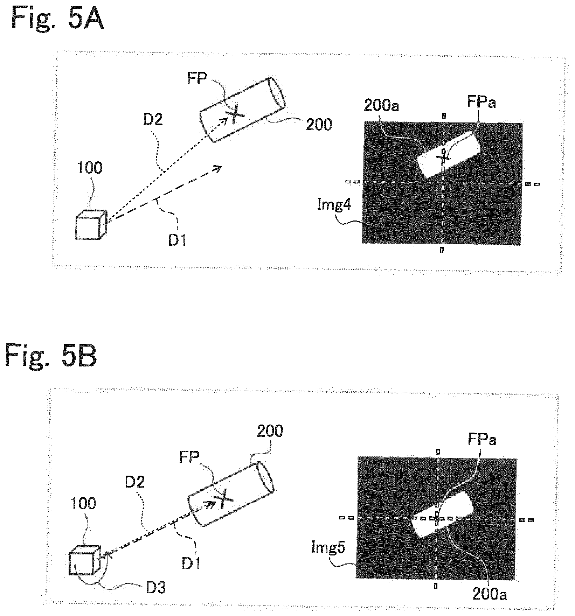

In a case where the first vector is not obtainable (step S4: NO), the controller 11 operates the attitude controller 50 to move the aerospace vehicle 100 relative to the space debris 200, such that the first vector becomes obtainable (step S5). Attitude control of the aerospace vehicle 100 is continuously performed during the navigation of the aerospace vehicle 100, for example, by zero momentum stabilization using the reaction wheel 52. In a case where the aerospace vehicle 100 navigates on a predetermined trajectory, during the navigation of the aerospace vehicle 100, the attitude of the aerospace vehicle 100 is controlled such that the space debris 200 is always within the image-taking range of the imager 40, and thereby the center of the taken image and the center of mass of the space debris 200 can be matched with each other. Hereinafter, a specific description is given. In the left side of each of FIG. 5A and FIG. 5B, the aerospace vehicle 100 is illustrated as a cubic object, and similar to FIG. 4A to FIG. 4C, a binarized image 200a of the space debris 200 is illustrated as a cylindrical object. A taken image Img4 of the space debris 200 is shown in the right side of FIG. 5A, and a taken image Img5 of the space debris 200 is shown in the right side of FIG. 5B. On each of the taken images Img4 and Img5, the center position of the taken image is indicated by a dashed crosshair reticle, and the center-of-mass position FP of the space debris 200a is indicated by a symbol X. In the description hereinafter, the center-of-mass position FP of the space debris 200a is referred to as "the debris center of mass."

As shown in the left side of FIG. 5A, an image-taking direction D1 of the imager 40 is indicated by a dashed arrow, and a direction D2 from the aerospace vehicle 100 toward the debris center of mass (hereinafter, "the center-of-mass direction D2") is indicated by a dotted arrow. In FIG. 5A, the center-of-mass direction D2 is illustrated above the image-taking direction D1.

As shown in the right side of FIG. 5A, the binarized image 200a of the space debris 200 is positioned above the center of the taken image Img4. The center-of-mass position FPa of the space debris 200 is superimposed on each of the taken images Img4 and Img5 shown in FIG. 5A and FIG. 5B.

The controller 11 operates the reaction wheel 52 of the attitude controller 50 to control the attitude of the aerospace vehicle 100, such that the debris center of mass FPa positioned above the center of the taken image coincides with the position of the center of the taken image.

In the left side of FIG. 5B, a rotation direction D3 of the aerospace vehicle 100 is indicated by a solid arrow. By rotating the aerospace vehicle 100 in the rotation direction D3 through control of the reaction wheel 52, the debris center of mass FPa and the center of the taken image Img5 can be made coincide with each other as shown in the right side of FIG. 5B.

The center of mass of the space debris 200 and the center of the taken image need not fully coincide with each other. For example, the debris center of mass may be brought into a predetermined range with respect to the center of the taken image, or conversely, the center of the screen may be brought into a predetermined range with respect to the debris center of mass. Alternatively, a reference different from the center of the taken image may be set, and the debris center of mass may be made coincide with the reference, or may be brought into a predetermined range with respect to the reference.

As shown in FIG. 3, after step S5 is performed, the above-described step S2, step S3, and step S4 are repeated. On the other hand, in a case where it is determined in the above step S4 that the first vector is obtainable (step S4: YES), the controller 11 causes the trajectory generator 13 to generate a target trajectory (step S6). Specifically, the trajectory generator 13 generates a target trajectory in a plane that is defined by the first vector and a second vector. The second vector is a vector in the image-taking direction D1 (the plane is hereinafter referred to as "the trajectory planning plane").

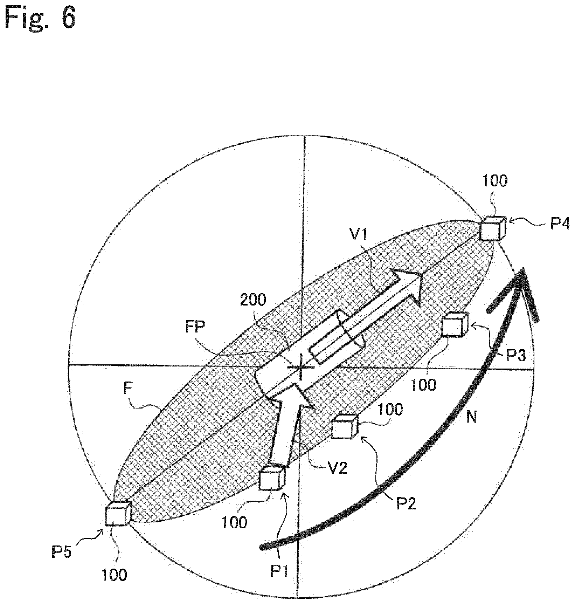

The trajectory planning plane can be defined based on results of the image processing performed on the obtained taken image. For example, as shown in FIG. 6, the trajectory planning plane is a plane F including a circle whose center is the space debris 200 (i.e., including a region indicated by lattice shading in FIG. 6). In a case where the center of the taken image and the debris center of mass FP are made coincide with each other in the aerospace vehicle 100, the trajectory planning plane F may be defined as a plane including the debris center of mass.

FIG. 6 shows a block arrow representing the first vector V1. Assume a case where the direction of the first vector V1 is defined as the forward direction from the space debris 200, and the aerospace vehicle 100 is at a position P1, which is a position diagonally backward of the space debris 200. In this case, since the imager 40 takes an image of the space debris 200 while facing the debris center of mass FP, the second vector V2 is a vector from the position P1 toward the debris center of mass FP. In this case, the trajectory planning plane F is a plane including a circle that is defined by the first vector V1 and the second vector V2.

FIG. 6 shows the following relative positions of the aerospace vehicle 100 with respect to the position of the space debris 200: the aforementioned position P1 diagonally backward of the space debris 200; a position P2 lateral to the space debris 200; a position P3 diagonally forward of the space debris 200; a position P4 forward of the space debris 200; and a position P5 backward of the space debris 200. The second vector V2 from each of these positions P1 to P5 may be a vector toward the debris center of mass FP, and the trajectory planning plane F may be defied as a plane including the first vector V1 and the second vector V2. In FIG. 6, each of the five positions P1, P2, P4, P4, and P5 is a position on the front side of the circumference of the illustrated trajectory planning plane F. Alternatively, each of the five positions P1, P2, P3, P4, and P5 may be a position on the back side of the circumference of the illustrated trajectory planning plane F.

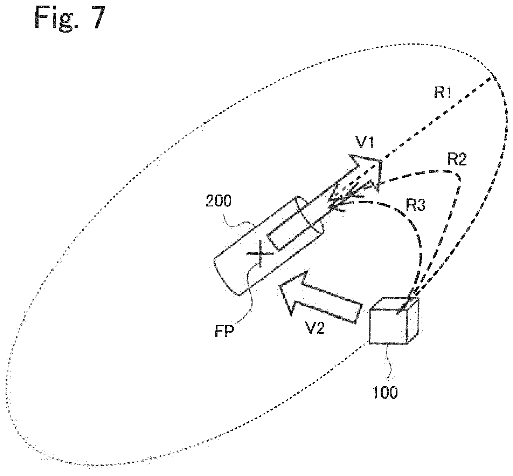

In step S6, as shown in FIG. 7, the controller 11 generates a path R1 as a target trajectory. The path R1 extends to a position immediately above the PAF 210 of the space debris 200, and includes the circumference of a circle whose center is the debris center of mass FP. The path R1 includes a circular orbit. Since the target trajectory is the path including the circular orbit, the aerospace vehicle 100 can be caused to orbit on the circular orbit. This makes it possible to repeat navigation multiple times to bring the aerospace vehicle 100 to a stop relative to the space debris 200 and to bring the aerospace vehicle 100 into proximity to the space debris 200, specifically to the position immediately above the PAF 210 (which is hereinafter referred to as "the target position"). Alternatively, the target trajectory may be not the path R1 including a circular orbit, but may be a path including an elliptical orbit.

Even in a case where the trajectory planning plane F is a plane including a circle whose center is the debris center of mass FP, the target trajectory may be a path including no circular orbit. As one example, the target trajectory may be a path that reduces as much as possible the consumption of the propellant of the aerospace vehicle 100. Specifically, the target trajectory may be a path that causes the aerospace vehicle 100 to travel parabolically from a position on the circumference included in the trajectory planning plane F to a position located forward of the space debris 200, such as a target trajectory R2 shown in FIG. 7. As another example, the target trajectory may be a path that shortens as much as possible (or minimizes) the time required by the aerospace vehicle 100 to reach the target position. Specifically, the target trajectory may be a parabolic path that is shorter in distance than the parabolic path of the target trajectory R2 and that causes the aerospace vehicle 100 to travel parabolically from a position on the circumference included in the trajectory planning plane F to a position located forward of the space debris 200, such as a target trajectory R3 shown in FIG. 7.

The trajectory planning plane F need not be a plane including the debris center of mass FP, so long as the trajectory planning plane F is a plane including the space debris 200.

As shown in FIG. 3, the controller 11 causes the aerospace vehicle 100 to navigate on the generated target trajectory (step S7). Specifically, the controller 11 causes the aerospace vehicle 100 to navigate on the target trajectory while controlling the attitude of the aerospace vehicle 100 by controlling the attitude controller 50.

It is possible that perturbation occurs on the space debris 200, and due to the perturbation a discrepancy may occur between an actual travel position of the space debris 200 and the target trajectory generated in step S6. For this reason, while the aerospace vehicle 100 is navigating on the target trajectory, the controller 11 needs to determine whether or not it is necessary to generate the target trajectory again due to perturbation on the space debris 200.

Accordingly, the controller 11 obtains a taken image of the space debris 200 from the imager 40 (step S8), and causes the image processor 12 to perform image processing on the obtained taken image (step S9), thereby obtaining the first vector V1. Since steps S8 and S9 are the same as the above-described steps S2 and S3, a detailed description of steps S8 and S9 is omitted herein.

The controller 11 determines whether or not the first vector V1 at the time of generating the current target trajectory and the first vector V1 re-obtained in step S9 coincide with each other (step S10). The "first vector V1 at the time of generating the current target trajectory" means the first vector V1 used to define the trajectory planning plane F at the time of generating the current target trajectory, and is the first vector V1 obtained in the above-described step S3. In a case where the first vector V1 obtained in step S3 is referred to as a "previous first vector V11" and the first vector V1 newly obtained in step S9 is referred to as a "current first vector V12," if no perturbation has occurred on the space debris 200, the previous first vector V11 and the current first vector V12 coincide with each other. On the other hand, if perturbation has occurred on the space debris 200, the current position of the space debris 200, i.e., the position of the space debris 200 at the time of obtaining the current first vector V12, deviates from the position of the space debris 200 on the target trajectory at the time of obtaining the previous first vector V11. In this case, even if the aerospace vehicle 100 is caused to navigate on the current target trajectory, the aerospace vehicle 100 cannot reach the target position. Therefore, in the present embodiment, whether or not the previous first vector V11 and the current first vector V12 coincide with each other is determined so as to determine whether or not the current target trajectory is a suitable trajectory in relation to the current position of the space debris 200. Whether or not the first vector V11 and the first vector V12 coincide with each other is determined by comparing the axial direction of the first vector V11 and the axial direction of the first vector V12 with each other.

In a case where it is determined that the first vector V11 and the first vector V12 do not coincide with each other (step S10: NO), it is necessary to newly generate the target trajectory. Therefore, until it is determined that the first vector V11 and the first vector V12 coincide with each other, the controller 11 repeats the above-described steps S6, S7, S8, S9, and S10. In this case, the previous first vector 11 in step S10 is the first vector used at the time of re-generating the target trajectory (i.e., the first vector obtained in step S9). On the other hand, in a case where it is determined that the first vector V11 and the first vector V12 coincide with each other (step S10: YES), there is no deviation between the direction of the first vector V11 and the direction of the second vector V12. Therefore, the current target trajectory is a suitable trajectory as seen from the current position of the space debris 200.

While navigating the aerospace vehicle 100, the controller 11 determines whether or not the aspect ratio is 1 at a position on the first vector V1 side (step S11). In a case where, for example, a path including a circular orbit on the circumference included in the trajectory planning plane F shown in FIG. 6 is generated as a target trajectory, the aerospace vehicle 100 orbits on the circumference in a direction N indicated by a bold arrow. In a case where the imager 40 takes an image of the space debris 200 from the position P1, the taken image Img1 shown in FIG. 4A is obtained, and as previously described, the aspect ratio of the binarized image 200a of the space debris 200 is not 1. In a case where the aerospace vehicle 100 navigates from the position P1 to the position P2, the imager 40 takes an image of the space debris 200 from a position lateral to the space debris 200. Therefore, the taken image Img2 shown in FIG. 4B is obtained, and as previously described, the aspect ratio of the binarized image 200a of the space debris 200 is not 1 (in a case where the aspect ratio is defined as the ratio of the longer side to the shorter side of the binarized image 200a, the aspect ratio in FIG. 4B is the maximum value, whereas in a case where the aspect ratio is defined as the ratio of the shorter side to the longer side of the binarized image 200a, the aspect ratio in FIG. 4B is the minimum value). In a case where the aerospace vehicle 100 navigates from the position P2 to the position P3, the taken image Img1 shown in FIG. 4A is obtained similar to the case of the position P1. In a case where the aerospace vehicle 10 is at the position P4, the taken image Img3 shown in FIG. 4C is obtained, and the aspect ratio of the binarized image 200a of the space debris 200 is substantially 1. As previously described, the position P4 is a position that is forward of the space debris 200, is located on the first vector V1 side of the space debris 200, and is straight above from the PAF 210. In a case where the aerospace vehicle 100 takes an image of the space debris 200 from the position P5, the taken image Img3 shown in FIG. 4C is obtained similar to the case of the position P4, and the aspect ratio of the binarized image 200a of the space debris 200 is substantially 1. However, the position P5 is not a target position. Therefore, in step S11, whether or not the aerospace vehicle 100 is positioned on the first vector V1 side on the target trajectory is determined in addition to the determination whether or not the aspect ratio is 1.

In a case where it is determined in step S11 that the aspect ratio is not 1 at a position on the first vector V1 side (step S11: NO), the above-described steps S7, S8, S9, S10, and S11 are repeated until it is determined in step S11 that the aspect ratio is 1 at a position on the first vector V1 side. Thus, the aerospace vehicle 100 repeats steps S7 to S11 while continuously monitoring whether its current navigational trajectory is a suitable trajectory or not, i.e., whether a new navigational trajectory should be generated or not.

On the other hand, in a case where it is determined in step S11 that the aspect ratio is 1 at a position on the first vector V1 side (step S11: YES), the controller 11 determines that the aerospace vehicle 100 has reached the target position, and brings the aerospace vehicle 100 to a stop relative to the space debris 200 (step S12). After step S12 is performed, the controller 11 ends the image-based navigation process, and proceeds to a process of removing the space debris 200.

In a case where the generated target trajectory is a path including a circular orbit, such as the path R1 shown in FIG. 7, after the aspect ratio has been determined to be 1, the controller 11 may determine that the aerospace vehicle 100 has reached the target position after causing the aerospace vehicle 100 to navigate from the position P4 shown in FIG. 6 to come into proximity to the front of the PAF 210 of the space debris 200. Alternatively, in a case where the target trajectory is the trajectory R2 or R3 shown in FIG. 7, i.e., a shortcut path that brings the aerospace vehicle 100 into proximity to the PAF 210 by deviating from the circular orbit, the controller 11 may determine that the aerospace vehicle 100 has reached the target position when the aspect ratio is determined to be 1.

According to the above-described configuration, by using the debris center of mass, the first vector V1, the aspect ratio, and the second vector V2, which are readily obtainable data, the target trajectory can be generated after detecting the attitude of the space debris 200. Therefore, the aerospace vehicle 100 can be readily and precisely brought into proximity to the space debris 200 while preventing the amount of information processing from becoming excessive. Moreover, the aerospace vehicle 100 can generate the target trajectory on its own without via a ground station. Accordingly, it is not necessary to transmit the taken image of the space debris 200 to the ground station and to generate the target trajectory at the ground station.

Furthermore, at the time of causing the aerospace vehicle 100 to navigate on the generated target trajectory, a position that is located on the first vector V1 side and at which the aspect ratio of the space debris 200 in the taken image becomes 1 is set as the target position. In a case where the aspect ratio is not 1, feedback control is performed to repeat the image processing and the target trajectory generation. This makes it possible to cause the aerospace vehicle 100 to autonomously navigate to the target position in proximity to the space debris 200 without communicating with the ground station. Consequently, the aerospace vehicle 100 can be caused to navigate to a more precise position.

In a case where the trajectory planning plane F is a plane including a circle whose center is the space debris 200, the circumference of the circle can be used as a part of the target trajectory. In this case, the aerospace vehicle 100 can be caused to orbit on a circular orbit whose center is the space debris 200. This makes it possible to cause the aerospace vehicle 100 to continue the orbiting until the aerospace vehicle 100 reaches the position at which the aspect ratio of the space debris 200 in the taken image becomes 1.

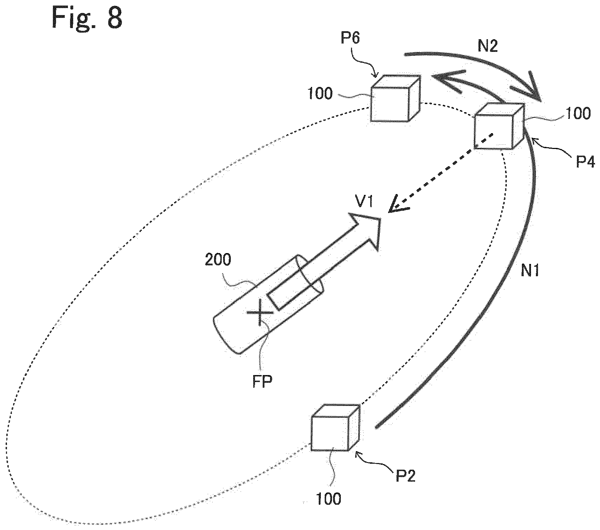

In a case where it is determined in the above-described step S12 that the aerospace vehicle 100 has reached the target position, and the aerospace vehicle 100 is brought to a stop relative to the space debris 200, if the aspect ratio at the position deviates from 1, there is a discrepancy between the target position and the position of the aerospace vehicle 100. For example, as shown in FIG. 8, assume a case where the aerospace vehicle 100 orbits in an arrow N1 direction from the position P2 toward the position P4 located forward of the space debris 200, but travels slightly past the position P4 to eventually reach a position P6 located diagonally forward of the space debris 200. In this case, the aerospace vehicle 100 may resume orbiting not in the arrow N1 direction, but in an arrow N2 direction, which is a direction opposite the arrow N1 direction.

As described above, from the position P6 at which the aspect ratio deviates from 1, the aerospace vehicle 100 may resume orbiting toward the position P4, at which the aspect ratio becomes 1. In this manner, even after the aerospace vehicle 100 that is orbiting is temporarily brought to a stop relative to the space debris 200, the orbiting can be resumed based on the aspect ratio to retry the operation to cause the aerospace vehicle 100 to reach the target position and bring the aerospace vehicle 100 to a stop relative to the space debris 200.

In the present embodiment, the controller 11 causes the aerospace vehicle 100 to navigate such that the aspect ratio becomes 1 at a position on the first vector V1 side. The controller 11 may be configured differently, so long as the controller 11 is configured to determine, based on the first vector V1 and the aspect ratio, that the aerospace vehicle 100 has reached the target position on the target trajectory. For example, the controller 11 may cause the aerospace vehicle 100 to navigate on the target trajectory while operating the attitude controller 50 until the aerospace vehicle 100 reaches a position, on the first vector V1 side, at which a deviation of the aspect ratio from 1 during the navigation becomes minimal. In this case, the minimal deviation of the aspect ratio may be set as a predetermined numerical value range, and when the aspect ratio falls within the numerical value range, the aspect ratio may be determined to be substantially 1. Alternatively, in a case where the controller 11 obtains the binarized image 200a of the space debris 200 by setting the first vector V1 as a reference, and the aspect ratio of the binarized image 200a falls within a predetermined numerical value range, it may be determined that the aerospace vehicle 100 has reached the target position. The aspect ratio may be 0.5.

### [Removal of Space Debris]

In a case where the aerospace vehicle 100 has reached the target position and, as shown in FIG. 2A, has reached the fixing range (i.e., a distance from the space debris 200, at which an operation of fixing the aerospace vehicle 100 to the space debris 200 by the fixer 20 is performable; for example, a distance of about 1.5 meters from the space debris 200) in the state of facing the PAF 210 of the space debris 200, a process of capturing the space debris 200 is performed. Specifically, the controller 11 starts an operation of fixing the remover 30 by the fixer 20. The extender 21 of the fixer 20 extends, and thereby the engager 22 is inserted into the opening 230 of the PAF 210. Thereafter, the engager 22 is kept inserted in the opening 230 and brought into engagement with the inside of the PAF 210. Consequently, the remover 30 is fixed to the PAF 210 of the space debris 200 via the fixer 20.

After the aerospace vehicle 100 has captured the space debris 200, as shown in FIG. 9A, the aerospace vehicle 100 navigates in a direction away from the space debris 200. In accordance therewith, the EDT 31 accommodated in the remover 30 is unwound from the reel. As shown in FIG. 9B, the remover 30 and the fixer 20 are separated from the aerospace vehicle 100, and the aerospace vehicle 100 leaves the orbit of the space debris 200. After the aerospace vehicle 100 has left the orbit of the space debris 200, the remover 30 still continues to travel in the direction away from the space debris 200. Accordingly, the unwinding of the EDT 31 from the remover 30 continues as shown in FIG. 9C, and thereby the EDT 31 is extended to a great extent. The EDT 31 is eventually extended several kilometers long (e.g., 5 to 10 kilometers). Thereafter, the traveling speed of the space debris 200 is reduced due to the function of the EDT 31. Consequently, the space debris 200 de-orbits, i.e., leaves the orbit around the Earth, enters the atmosphere, and burns up.

### [Variation 1]

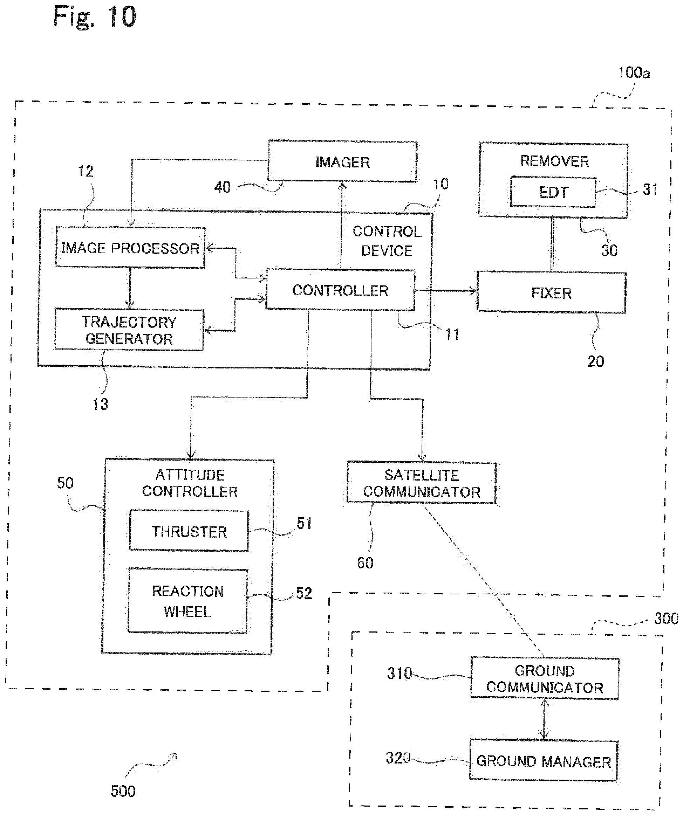

FIG. 10 shows a space debris removal system 500, which includes an aerospace vehicle 100a and a management center 300. In the space debris removal system 500, the aerospace vehicle 100a and the management center 300 communicate with each other, and the management center 300 manages the aerospace vehicle 100a. The aerospace vehicle 100a is different from the aerospace vehicle 100 of the above-described embodiment in that the aerospace vehicle 100a additionally includes a satellite communicator 60. The satellite communicator 60 communicates with the management center 300. The other configurational features of the aerospace vehicle 100a are the same as those of the aerospace vehicle 100. Therefore, in the description below, the same components as those of the aerospace vehicle 100 are denoted by the same reference signs as those used for the aerospace vehicle 100, and a detailed description thereof is omitted. The management center 300 is a ground station. The management center 300 includes a ground communicator 310 and a ground manager 320. The ground communicator 310 communicates with the aerospace vehicle 100a. The ground manager 320 manages the aerospace vehicle 100a.

For example, in the space debris removal system 500, the ground manager 320 may control the navigation of the aerospace vehicle 100a in the long-distance range and the intermediate-distance range. For example, when the aerospace vehicle 100a is brought closer to the space debris 200 to fall within the short-distance range, the ground manager 320 may instruct the controller 11 to start the image-based navigation process shown in FIG. 3. Alternatively, for example, the image-based navigation process illustratively shown in FIG. 3 may include a control management step by the ground manager 320 as necessary. In this control management step, for example, the ground manager 320 manages the control of an orbiting direction when the aerospace vehicle 100a orbits on a target trajectory. Specifically, in a case where the initial position of the aerospace vehicle 100a is the position P2 shown in FIG. 8, the ground manager 320 may give, from the ground, an instruction on whether to cause the aerospace vehicle 100a to orbit in the arrow N1 direction or to cause the aerospace vehicle 100a to orbit in the arrow N2 direction, which is a direction opposite the arrow N1 direction. As another example, the ground manager 320 may instruct the controller 11 to start the operation of fixing the remover 30 by the fixer 20. As yet another example, after the remover 30 is fixed to the PAF 210 of the space debris 200, the ground manager 320 may control the navigation of the aerospace vehicle 100a in the direction away from the space debris 200.

### [Variation 2]

In the above-described embodiment and Variation 1, each of the aerospace vehicles 100 and 100a is an artificial satellite that captures the space debris 200. However, the present disclosure is not thus limited. For example, each of the aerospace vehicles 100 and 100a may be an artificial satellite that replenishes another artificial satellite with a propellant. In this case, the target position for each of the aerospace vehicles 100 and 100a may be a position immediately above a propellant replenishing port, and a position to which the remover 30 is fixed may be the propellant replenishing port.

### [Variation 3]

In the above-described embodiment, the imager 40 outputs the binarized image to the image processor 12. However, the present disclosure is not thus limited. For example, the image outputted from the imager 40 may be a monochrome multi-gradation image or a color image. In this case, the image obtained from the imager 40 may be binarized by the image processor 12.

### [Variation 4]

In the above-described embodiment and variations, the fixer 20 may fix the aerospace vehicle to any part of the space debris 200, and the fixer 20 may be configured differently. As one example, the fixer 20 may perform the fixing by launching a harpoon into the space debris 200. As another example, the fixer 20 may throw a net over the space debris 200 to catch the space debris 200 with the net. As yet another example, the fixer 20 may hold a part of the space debris 200 with a robotic arm.

### [Variation 5]

In the above-described embodiment, a taken image is obtained in a case where it is determined that the taken image is obtainable. However, the present disclosure is not thus limited. For example, in a case where the imager 40 is always taking images and a taken image inputted to the image processor 12 is not a binarized image, the space debris 200 may be detected through image processing by the image processor 12.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The present disclosure is not limited to the embodiments described above, and various modifications can be made within the scope of the claims.

### Reference Signs List

100, 100a: aerospace vehicle
10: control device
11: controller
12: image processor
13: trajectory generator
40: imager
50: attitude controller
51: thruster
52: reaction wheel
20: fixer
21: extender
22: engager
30: remover
31: EDT
200: space debris
210: PAF
220: body
230: opening
500: space debris removal system
60: satellite communicator
300: management center
310: ground communicator
320: ground manager
Img1, Img2, Img3, Img4, lmg5: taken image
200a: binarized image of space debris
D1: image-taking direction
D2: center-of-mass direction
D3: rotation direction
FP, FPa: center of mass
V1: first vector
V2: second vector
F: trajectory planning plane
P1, P2, P3, P4, P5, P6: position
N, N1, N2: direction
R1: path
R2, R3: trajectory

## Claims

1. A control device configured to be installed in an aerospace vehicle (100), the control device comprising:
an image processor (12) configured to perform image processing on a taken image (Img) of a non-cooperative object (200) to obtain a center-of-mass position of the non-cooperative object corresponding to the shape of the non-cooperative object in the taken image and a first vector (V1), the first vector being a vector that passes through the center-of-mass position of the non-cooperative object, is parallel to a longitudinal direction of the non-cooperative object, and includes a vector component in a direction in which the aerospace vehicle is to be brought into proximity to the non-cooperative object;
a trajectory generator (13) configured to generate a target trajectory (R) on which the aerospace vehicle is to navigate to come into proximity to the non-cooperative object; and
a controller (11) configured to cause the aerospace vehicle to navigate on the target trajectory by controlling an attitude of the aerospace vehicle, said controller configured to drive a thruster (51), a reaction wheel (52) and/or another attitude controller, such as a magnetorquer and a momentum gyro, wherein
the trajectory generator generates the target trajectory in a plane (F) that is defined by the first vector and a second vector (V2), the second vector being a vector in an image-taking direction (D1) in which the taken image is taken.

2. The control device according to claim 1, wherein
the image processor (12) obtains, from the taken image (Img) of the non-cooperative object (200), the first vector (V1) and an aspect ratio of the non-cooperative object in the taken image, the taken image being taken while the aerospace vehicle (100) is navigating on the target trajectory (R), and
the controller (11) determines whether or not the aerospace vehicle has reached a target position on the target trajectory based on the obtained first vector and the obtained aspect ratio.

3. The control device according to claim 1 or 2, wherein
the image processor (12) repeatedly obtains an aspect ratio of the non-cooperative object (200) in the taken image (Img) of the non-cooperative object, the taken image being taken while the aerospace vehicle (100) is navigating on the target trajectory (R), and
until the obtained aspect ratio becomes 1, the controller (11) causes the aerospace vehicle to navigate on the target trajectory while changing the attitude of the aerospace vehicle such that, on the target trajectory, the aerospace vehicle faces in the direction in which the aerospace vehicle is to be brought into proximity to the non-cooperative object.

4. The control device according to any one of claims 1 to 3, wherein
in a case where the first vector (V11) that has been used to generate the target trajectory (R), and the first vector (V12) that is newly obtained by the image processor (12) while the aerospace vehicle (100) is navigating on the target trajectory, do not coincide with each other, the controller (11) at least repeats generating the target trajectory and causing the aerospace vehicle to navigate on the generated target trajectory.

5. The control device according to any one of claims 1 to 4, wherein
the taken image (Img) is a binarized image (200a).

6. The control device according to any one of claims 1 to 5, wherein
the image processor (12) calculates the first vector (V1) based on an asymmetry of the non-cooperative object (200) in the longitudinal direction thereof.

7. An aerospace vehicle comprising:
the control device (10) according to any one of claims 1 to 6;
a remover (30) that removes the non-cooperative object; and
a fixer (20) that fixes the remover to the non-cooperative object (200).

8. The aerospace vehicle according to claim 7, comprising:
an extender (21) that extends in a forward travelling direction of the aerospace vehicle; and
an engager (22) that is mounted on an end of the extender in the forward travelling direction and that is configured to engage with an opening of a PAF (210) located on an end of the non-cooperative object (200).

9. The aerospace vehicle according to claim 7 or 8, wherein
the remover (30) includes an electrodynamic tether EDT (31).

10. The aerospace vehicle according to any one of claims 7 to 9, comprising an attitude controller (50) that controls the attitude of the aerospace vehicle (100), wherein
the attitude controller includes at least one of a thruster (51) or a reaction wheel (52).

11. A computer program for causing a computer to realize the functions of:
performing image processing on a taken image (Img) of a non-cooperative object (200) to obtain a center-of-mass position of the non-cooperative object and a first vector (V1), the first vector being a vector that passes through the center-of-mass position of the non-cooperative object, is parallel to a longitudinal direction of the non-cooperative object, and includes a vector component in a direction in which an aerospace vehicle is to be brought into proximity to the non-cooperative object;
generating a target trajectory (R) on which the aerospace vehicle is to navigate to come into proximity to the non-cooperative object; and
sending navigation instructions for controlling an attitude of the aerospace vehicle to cause the aerospace vehicle to navigate on the target trajectory, wherein
the function of generating the target trajectory includes a function of generating the target trajectory in a plane (F) that is defined by the first vector and a second vector (V2), the second vector being a vector in an image-taking direction (D1) in which the taken image is taken.

## Patentansprüche

1. Steuerungsvorrichtung, die so ausgelegt ist, dass sie in einem Luft- und Raumfahrzeug (100) installiert werden kann, wobei die Steuerungsvorrichtung Folgendes umfasst:
einen Bildprozessor (12), der so ausgelegt ist, dass er eine Bildverarbeitung an einem aufgenommenen Bild (Img) eines nicht-kooperativen Objekts (200) durchführt, um eine Schwerpunktposition des nicht-kooperativen Objekts entsprechend der Form des nicht-kooperativen Objekts in dem aufgenommenen Bild und einen ersten Vektor (V1) zu erhalten, wobei es sich bei dem ersten Vektor um einen Vektor handelt, der durch die Schwerpunktposition des nicht-kooperativen Objekts verläuft, parallel zu einer Längsrichtung des nicht-kooperativen Objekts ist und eine Vektorkomponente in einer Richtung enthält, in der das Luft- und Raumfahrzeug in die Nähe des nicht-kooperativen Objekts gebracht werden soll;
einen Flugbahngenerator (13), der so ausgelegt ist, dass er eine Zielflugbahn (R) erzeugt, auf der das Luft- und Raumfahrzeug navigieren soll, um in die Nähe des nicht-kooperativen Objekts zu kommen; und
eine Steuerung (11), die so ausgelegt ist, dass sie das Luft- und Raumfahrzeug veranlasst, auf der Zielflugbahn zu navigieren, indem sie eine Fluglage des Luft- und Raumfahrzeugs steuert, wobei die Steuerung so ausgelegt ist, dass sie ein Triebwerk (51), ein Reaktionsrad (52) und/oder eine andere Fluglagensteuerung wie einen Magnetorquer oder einen Momentenkreisel antreibt, wobei
der Flugbahngenerator die Zielflugbahn in einer Ebene (F) erzeugt, die durch den ersten Vektor und einen zweiten Vektor (V2) definiert ist, wobei es sich bei dem zweiten Vektor um einen Vektor in einer Bildaufnahmerichtung (D1) handelt, in der das aufgenommene Bild aufgenommen wurde.

2. Steuerungsvorrichtung nach Anspruch 1, wobei
der Bildprozessor (12) aus dem aufgenommenen Bild (Img) des nicht-kooperativen Objekts (200) den ersten Vektor (V1) und ein Seitenverhältnis des nicht-kooperativen Objekts in dem aufgenommenen Bild erhält, wobei das aufgenommene Bild aufgenommen wird, während das Luft- und Raumfahrzeug (100) auf der Zielflugbahn (R) navigiert, und
die Steuerung (11) basierend auf dem erhaltenen ersten Vektor und dem erhaltenen Seitenverhältnis bestimmt, ob das Luft- und Raumfahrzeug eine Zielposition auf der Flugbahn erreicht hat oder nicht.

3. Steuerungsvorrichtung nach Anspruch 1 oder 2, wobei
der Bildprozessor (12) wiederholt ein Seitenverhältnis des nicht-kooperativen Objekts (200) in dem aufgenommenen Bild (Img) des nicht-kooperativen Objekts erhält, wobei das aufgenommene Bild aufgenommen wird, während das Luft- und Raumfahrzeug (100) auf der Zielflugbahn (R) navigiert, und
bis das erhaltene Seitenverhältnis 1 wird, die Steuerung (11) das Luft- und Raumfahrzeug veranlasst, auf der Flugbahn zu navigieren und dabei die Fluglage des Luft- und Raumfahrzeugs so zu ändern, dass das Luft- und Raumfahrzeug auf der Flugbahn in die Richtung weist, in der das Luft- und Raumfahrzeug in die Nähe des nicht-kooperativen Objekts gebracht werden soll.

4. Steuerungsvorrichtung nach einem beliebigen der Ansprüche 1 bis 3, wobei
in einem Fall, in dem der erste Vektor (V11), der verwendet wurde, um die Flugbahn (R) zu erzeugen, und der erste Vektor (V12), der von dem Bildprozessor (12) neu erhalten wird, während das Luft- und Raumfahrzeug (100) auf der Flugbahn navigiert, nicht miteinander übereinstimmen, die Steuerung (11) mindestens die Erzeugung der Flugbahn und das Navigieren des Luft- und Raumfahrzeugs auf der erzeugten Flugbahn wiederholt.

5. Steuerungsvorrichtung nach einem beliebigen der Ansprüche 1 bis 4, wobei
es sich bei dem aufgenommenen Bild (Img) um ein binarisiertes Bild (200a) handelt.

6. Steuerungsvorrichtung nach einem beliebigen der Ansprüche 1 bis 5, wobei
der Bildprozessor (12) den ersten Vektor (V1) basierend auf einer Asymmetrie des nicht-kooperativen Objekts (200) in dessen Längsrichtung berechnet.

7. Luft- und Raumfahrzeug, das Folgendes umfasst:
die Steuerungsvorrichtung (10) nach einem beliebigen der Ansprüche 1 bis 6;
einen Entferner (30), der das nicht-kooperative Objekt entfernt; und
einen Fixierer (20), der den Entferner an dem nicht-kooperativen Objekt (200) fixiert.

8. Luft- und Raumfahrzeug nach Anspruch 7, das Folgendes umfasst:
eine Verlängerung (21), die sich in einer Fortbewegungsrichtung des Luft- und Raumfahrzeugs erstreckt; und
eine Eingriffseinrichtung (22), die an einem Ende der Verlängerung in der Fortbewegungsrichtung angebracht und so ausgelegt ist, dass sie in eine Öffnung eines PAF (210) eingreift, das sich an einem Ende des nicht-kooperativen Objekts (200) befindet.

9. Luft- und Raumfahrzeug nach Anspruch 7 oder 8, wobei
der Entferner (30) ein elektrodynamisches Halteseil (EDT, Electrodynamic Tether) (31) enthält.

10. Luft- und Raumfahrzeug nach einem beliebigen der Ansprüche 7 bis 9, das eine Fluglagensteuerung (50) umfasst, die die Fluglage des Luft- und Raumfahrzeugs (100) steuert, wobei
die Fluglagensteuerung mindestens eines der folgenden Elemente enthält: ein Triebwerk (51) oder ein Reaktionsrad (52).

11. Computerprogramm, um einen Computer zu veranlassen, die folgenden Funktionen auszuführen:
Durchführen einer Bildverarbeitung an einem aufgenommenen Bild (img) eines nicht-kooperativen Objekts (200), um eine Schwerpunktposition des nicht-kooperativen Objekts und einen ersten Vektor (V1) zu erhalten, wobei es sich bei dem ersten Vektor um einen Vektor handelt, der durch die Schwerpunktposition des nicht-kooperativen Objekts verläuft, parallel zu einer Längsrichtung des nicht-kooperativen Objekts ist und eine Vektorkomponente in einer Richtung enthält, in der ein Luft- und Raumfahrzeug in die Nähe des nicht-kooperativen Objekts gebracht werden soll;
Erzeugen einer Zielflugbahn (R), auf der das Luft- und Raumfahrzeug navigieren soll, um in die Nähe des nicht-kooperativen Objekts zu kommen; und
Senden von Navigationsanweisungen zum Steuern einer Fluglage des Luft- und Raumfahrzeugs, um das Luft- und Raumfahrzeug zu veranlassen, auf der Zielflugbahn zu navigieren, wobei
die Funktion zum Erzeugen der Zielflugbahn eine Funktion zum Erzeugen der Zielflugbahn in einer Ebene (F) enthält, die durch den ersten Vektor und einen zweiten Vektor (V2) definiert ist, wobei es sich bei dem zweiten Vektor um einen Vektor in einer Bildaufnahmerichtung (D1) handelt, in der das aufgenommene Bild aufgenommen wurde.

## Revendications

1. Dispositif de commande conçu pour être installé dans un engin aérospatial (100), le dispositif de commande comprenant :
un processeur d'image (12) conçu pour effectuer un traitement d'image sur une prise de vue (Img) d'un objet non coopératif (200) afin d'obtenir une position de centre de masse de l'objet non coopératif, correspondant à la forme de l'objet non coopératif (200) dans la prise de vue, et un premier vecteur (V1), le premier vecteur étant un vecteur qui passe par la position de centre de masse de l'objet non coopératif, est parallèle à la direction longitudinale de l'objet non coopératif, et comprend une composante vectorielle dans une direction dans laquelle l'engin aérospatial doit être amené à proximité de l'objet non coopératif,
un générateur de trajectoire (13) conçu pour générer une trajectoire cible (R) sur laquelle l'engin aérospatial doit naviguer pour se rapprocher de l'objet non coopératif, et
un organe de commande (11) conçu pour amener l'engin aérospatial à naviguer sur la trajectoire cible en commandant l'attitude de l'engin aérospatial, ledit organe de commande étant conçu pour piloter un propulseur (51), une roue de réaction (52) et/ou un autre organe de commande d'attitude, tel qu'un coupleur magnétique ou un gyroscope à moment ;
ledit générateur de trajectoire générant la trajectoire cible dans un plan (F) qui est défini par le premier vecteur et un deuxième vecteur (V2), le deuxième vecteur étant un vecteur existant dans une direction de prise de vue (D1) dans laquelle la vue est prise.

2. Dispositif de commande selon la revendication 1, dans lequel
le processeur d'image (12) obtient, à partir de la prise de vue (Img) de l'objet non coopératif (200), le premier vecteur (V1) et un rapport hauteur/largeur de l'objet non coopératif dans la prise de vue, la vue étant prise pendant que l'engin aérospatial (100) navigue sur la trajectoire cible (R), et
l'organe de commande (11) détermine si l'engin aérospatial a atteint ou non une position cible sur la trajectoire cible compte tenu du premier vecteur obtenu et du rapport hauteur/largeur obtenu.

3. Dispositif de commande selon la revendication 1 ou 2, dans lequel
le processeur d'image (12) obtient de manière répétée un rapport hauteur/largeur de l'objet non coopératif (200) dans la prise de vue (Img) de l'objet non coopératif, ladite vue étant prise pendant que l'engin aérospatial (100) navigue sur la trajectoire cible (R), et
tant que le rapport hauteur/largeur obtenu n'est pas égal à 1, l'organe de commande (11) amène l'engin aérospatial à naviguer sur la trajectoire cible tout en modifiant l'attitude de l'engin aérospatial de telle façon que, sur la trajectoire cible, l'engin aérospatial soit orienté dans la direction dans laquelle l'engin aérospatial l'engin doit être amené à proximité de l'objet non coopératif.

4. Dispositif de commande selon l'une quelconque des revendications 1 à 3, dans lequel
dans le cas où le premier vecteur (V11), ayant servi à générer la trajectoire cible (R), et le premier vecteur (V12), nouvellement obtenu par le processeur d'image (12) pendant que l'engin aérospatial (100) navigue sur la trajectoire cible, ne coïncident pas l'un avec l'autre, l'organe de commande (11) répète au moins la génération de la trajectoire cible et la navigation de l'engin aérospatial sur la trajectoire cible générée.

5. Dispositif de commande selon l'une quelconque des revendications 1 à 4, dans lequel
la prise de vue (Img) est une prise de vue binarisée (200a).

6. Dispositif de commande selon l'une quelconque des revendications 1 à 5, dans lequel
le processeur d'image (12) calcule le premier vecteur (V1) compte tenu d'une asymétrie de l'objet non coopératif (200) dans sa direction longitudinale.

7. Engin aérospatial comprenant :
le dispositif de commande (10) selon l'une quelconque des revendications 1 à 6,
un dispositif de retrait (30) qui retire l'objet non coopératif, et
un dispositif de fixation (20) qui fixe le dispositif de retrait sur l'objet non coopératif (200).

8. Engin aérospatial selon la revendication 7, comprenant :
une extension (21) qui s'étend dans la direction de déplacement avant de l'engin aérospatial, et
un dispositif agrippant (22) qui est monté sur une extrémité de l'extension dans la direction de déplacement avant et qui est conçu pour agripper une ouverture d'un raccord de fixation de charge utile (PAF, payload attach fitting) (210) situé sur une extrémité de l'objet non coopératif (200).

9. Engin aérospatial selon la revendication 7 ou 8, dans lequel
le dispositif de retrait (30) comprend un câble électrodynamique (EDT, electrodynamic tether) (31).

10. Engin aérospatial selon l'une quelconque des revendications 7 à 9, comprenant un organe de commande d'attitude (50) qui commande l'attitude de l'engin aérospatial (100),
ledit organe de commande d'attitude comprenant au moins un des éléments suivant : un propulseur (51) ou une roue de réaction (52).

11. Programme informatique permettant à un ordinateur d'effectuer les fonctions suivantes :
réalisation d'un traitement d'image sur une prise de vue (Img) d'un objet non coopératif (200) pour obtenir une position de centre de masse de l'objet non coopératif et un premier vecteur (V1), le premier vecteur étant un vecteur qui passe par la position de centre de masse de l'objet non coopératif, est parallèle à la direction longitudinale de l'objet non coopératif, et comprend une composante vectorielle dans une direction dans laquelle un engin aérospatial doit être amené à proximité de l'objet non coopératif,
génération d'une trajectoire cible (R) sur laquelle l'engin aérospatial doit naviguer pour se rapprocher de l'objet non coopératif, et
envoi d'instructions de navigation permettant de commander l'attitude de l'engin aérospatial afin d'amener l'engin aérospatial à naviguer sur la trajectoire cible ;
ladite fonction de génération de trajectoire cible comprenant une fonction de génération de trajectoire cible dans un plan (F) qui est défini par le premier vecteur et un deuxième vecteur (V2), le deuxième vecteur étant un vecteur existant dans une direction de prise de vue (Dl) dans laquelle la vue est prise.
